# EUROPEAN PATENT APPLICATION

(11) **EP 1 591 911 A1**
(43) Date of publication of application: **02.11.2005**
(21) Application number: 03815728.5
(22) Date of filing: 03.02.2003
(51) Int. Cl.: G06F 15/00, G06F 13/00

(54) **SYNCHRONIZATION PROGRAM**

(71) Applicant: MVP, Inc., Chuo-ku, Tokyo 103-0025 (JP)
(72) Inventor: KAWAKITA, Jun, Minato-ku, Tokyo 106-0047 (JP)
(74) Representative: HOFFMANN EITLE
(86) International application number: PCT/JP2003/001066
(87) International publication number: WO 2004/070616

(57) **Abstract**

The object is to provide a synchronizatsion program for displaying by synchronizing the contents between a plurality of computer terminals.

The synchronization program causes the computer terminal to function as a contents acquisition means for acquiring and displaying the contents stored in a storage means upon receipt of a contents display request or a contents update event at the computer terminal, a contents transmitting/receiving means for receiving the contents, in the absence of the requested contents in the storage means, from any other computer terminal than the computer terminal and storing them in the storage means, and an update means for notifying the contents update event to the contents acquisition means.

## Description

### TECHNICAL FIELD

This invention relates to a synchronization program for synchronizing and displaying the contents between a plurality of computer terminals.

### BACKGROUND ART

What is called the synchronization program(collaboration program) exists to display the contents such as texts and images on a web browser, etc. in synchronism with each other among a plurality of computer terminals.

In the conventional synchronization program, a collaboration server on a network and a plurality of computer terminals for collaboration are connected with each other, and the contents registered in advance on the collaboration server are transmitted to each computer terminal thereby to display the contents in synchronism with each other. In other words, multiple contents to be synchronized are held on the collaboration server. An example of such synchronization program is disclosed in Japanese Patent Laid-open Publication No. 2002-125214 (Patent Document 1).

The conventional synchronization program typically disclosed in Patent Document 1 is implemented in such a manner that the same contents are transmitted to a plurality of computer terminals by a collaboration server and displayed in each of the computer terminals that have received them.

Therefore, the contents processed in the collaboration server are simply transmitted by the collaboration server to each computer terminal through a network and displayed at each computer terminal.

In such a synchronization program, the contents and the function to realize the synchronization, i.e. the function to transmit the contents from the collaboration server to each computer terminal are required to be stored in the collaboration server in advance. Also, to realize the synchronization of the contents, the permission to use or the like is required to be registered in the collaboration server in advance.

With the conventional collaboration server, because the above-mentioned mechanism is employed, a great variety of and a multiplicity of contents are required to be stored in the collaboration server in consideration of a great variety of and a multiplicity of prospective users, and a collaboration server of high performance is also required. This is by reason of the fact that in the absence of a great variety of and a multiplicity of contents, the range of use by the users is limited. Also, in the case where the a plurality of users conduct a plurality of synchronizing operations with respect to the same collaboration server, the necessity of processing a multiplicity of contents on the collaboration server may extremely delay the process in the absence of a high-performance collaboration server, and in some cases, the processing capacity may be surpassed, resulting in the process being stopped.

### DISCLOSURE OF THE INVENTION

In view of the above-mentioned problem, the present inventor has invented a synchronization program capable of synchronizing the contents between a plurality of computer terminals respectively without any collaboration server.

According to the invention as set forth in claim 1, there is provided a synchronization program for causing a computer terminal having a storage means to store at least one or more content to function in such a manner as to synchronize the contents with one or more other computer terminal to be synchronized with which a session is established through a session server, wherein the synchronization program causes the computer terminal to function as; a contents acquisition means for acquiring and displaying the contents stored in the storage means; a contents transmitting/receiving means for acquiring and storing the contents of which a display request is received from the other computer terminal in the storage means; and an update means for notifying a contents update event to the contents acquisition means or the other computer terminal in the case where new contents are stored in the storage means; wherein the synchronization program causes, by the contents acquisition means, the computer terminal to function in such a manner that in the presence of the contents requested for display in the storage means, to acquire and display the contents stored in the storage means, and upon receipt of the notice of the contents update event, to acquire and display the contents corresponding to the contents update event and stored in the storage means; and wherein the synchronization program causes, by the contents transmitting/receiving means, the computer terminal to function in such a manner that, in the absence of the contents requested for display or the contents corresponding to the contents update event in the storage means, to acquire the contents from other computer than the computer terminal and store them in the storage means.

According to the invention as set forth in claim 2, there is provided a synchronization program, wherein the computer terminal is caused to function in such a manner that in the case where the computer terminal is a host side of the session, the contents transmitting/receiving means acquires the contents from any other computer terminal than the computer terminal connected to the network and stores the contents in the storage means, the contents are displayed by the contents acquisition means, the update means notifies the contents update event to the other computer terminal, and the contents transmitting/receiving means receives the contents transmission request from the other computer terminal, thereby transmitting the contents stored in the storage means to the other computer terminal and causes the contents to be displayed at the other computer terminal which is a remote side of the session.

According to the invention as set forth in claim 3, there is provided a synchronization program, wherein the computer terminal is caused to function in such a manner that in the case where the computer terminal is a remote side of the session and the contents requested for display are not stored in the storage means, the contents transmitting/receiving means transmits the contents acquisition request to the other computer terminal which is a host side of the session; the update means receives the contents update event from the other computer terminal which is a host side of the session; the contents transmitting/receiving means transmits the contents transmission request to the other computer terminal, receives the contents from the other computer terminal and stores the contents in the storage means of the computer terminal; and the contents acquisition means displays the contents.

According to the invention as set forth in claim 4, there is provided a synchronization program, wherein the computer terminal is caused to function in such a manner that in the case where the computer terminal is a remote side of the session and the contents requested for display are stored in the storage means, the contents acquisition means acquires the contents from the storage means and displays the contents, and the update means notifies the contents update event to the other computer terminal which is a host side of the session and causes the contents stored in the storage means of the other computer terminal to be displayed at the other computer terminal.

In the invention according to claims 1 to 4, the synchronism can be established between the computer terminals without holding the contents to be synchronized on the server, unlike in the conventional collaboration server. Specifically, the contents are held in each computer terminal, and therefore the collaboration server is not required of a high performance thereby making it possible to construct an inexpensive system.

Further, in the prior art, the contents are held in the collaboration server and therefore the synchronizing computer terminals are limited to those under the control of the collaboration server. Since the session server has no other function than to manage the session, the routing between servers can be easily realized. Thus, without being limited to those under the control of a specified collaboration server, arbitrary terminals on the internet can be synchronized with each other.

According to the invention as set forth in claim 5, there is provided a synchronization program, wherein the synchronization program causes the computer terminal to function as a control information means for receiving the input of the control information for the contents of the contents browsing means, transmitting the control information to the other computer terminal through the session server, and based on the input of the control information at the other computer terminal, receiving the control information transmitted from the other computer terminal, and reflecting the control information in the contents of the contents browsing means.

According to the invention as set forth in claim 6, there is provided a synchronization program, wherein the control information includes any one of the movement of the scroll bar, the change in size or position of the window, the drawing of the contents and the movement of the mouse cursor.

According to the invention as set forth in claim 7, there is provided a synchronization program, wherein the computer terminal is caused to function in such a manner that the control information means displays a transparent screen superposed on the contents, and transmits the input drawing coordinate and the input drawing type to the other computer terminal, and the drawing coordinate and the drawing type are received from the other computer terminal, and the drawing type is drawn at the coordinate of the contents.

In the invention according to claims 5 to 7, the contents controlled by the user on the contents browsing means such as the web browser can be reflected also in the computer terminal of the other party of communication.

According to the invention as set forth in claim 8, there is provided a synchronization program, wherein the computer terminal is caused to function in such a manner that the synchronization program or the computer terminal having the synchronization program can transmit and receive data to and from the log management server arranged on the network, and the synchronization program functions as a log information transmission means for receiving the contents display request or the control information input to the contents browsing means and transmitting them as a log for the other computer terminal to the log management server, and a log information receiving means for receiving the log of the other computer terminal from the log management server and causing the log to be executed by the content browsing means.

According to the invention as set forth in claim 9, there is provided a synchronization program, wherein the log management server notifies the computer terminal constituting the other party of the log that the log is stored.

According to the invention as set forth in claim 10, there is provided a synchronization program, wherein the log management server notifies by transmitting the electronic mail to the computer terminal constituting the other party of the log or when the computer terminal constituting the other party of the log logged in the session server.

In the invention according to claims 8 to 10, even in the case where the computer terminal of the other party fails to log in to the session server and the session is not established between the computer terminals, the contents thereof can be executed later by and notified to the computer terminal of the other party.

According to the invention as set forth in claim 11, there is provided a synchronization program, wherein the synchronization program causes the computer terminal to function in such a manner that in the case where the computer terminal conducts communication by SSL with any other computer terminal than the computer terminal, the communication by SSL is conducted also between the computer terminal and the other computer terminal thereby to synchronize the contents.

In the invention according to claim 11, even in the case where the host computer terminal acquires the contents requiring such a confidentiality as to require SSL communication, the confidentiality can be secured by conducting the SSL communication with the remote computer terminal.

### BRIEF DESCRIPTION OF THE DRAWINGS

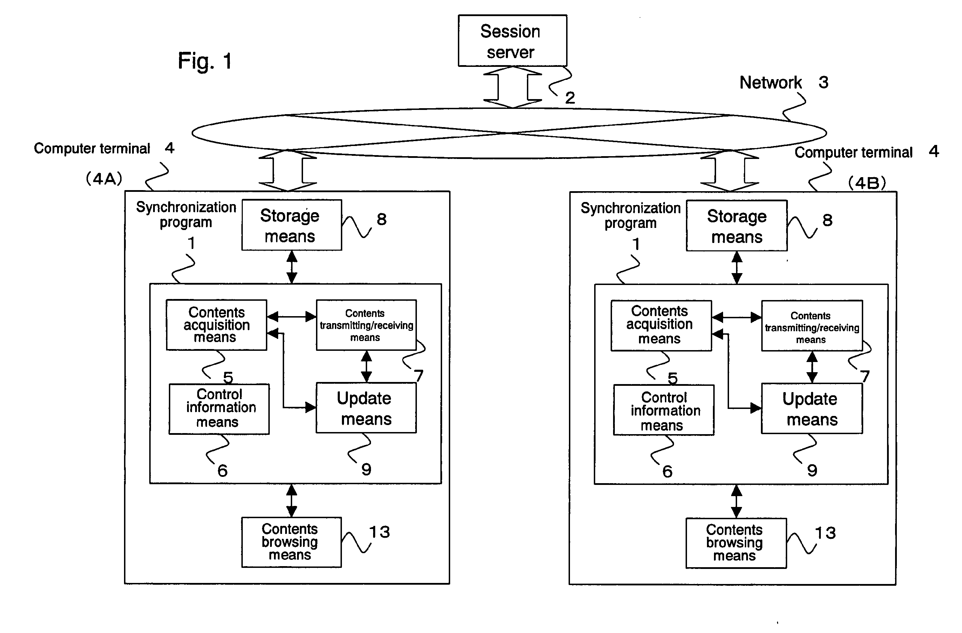

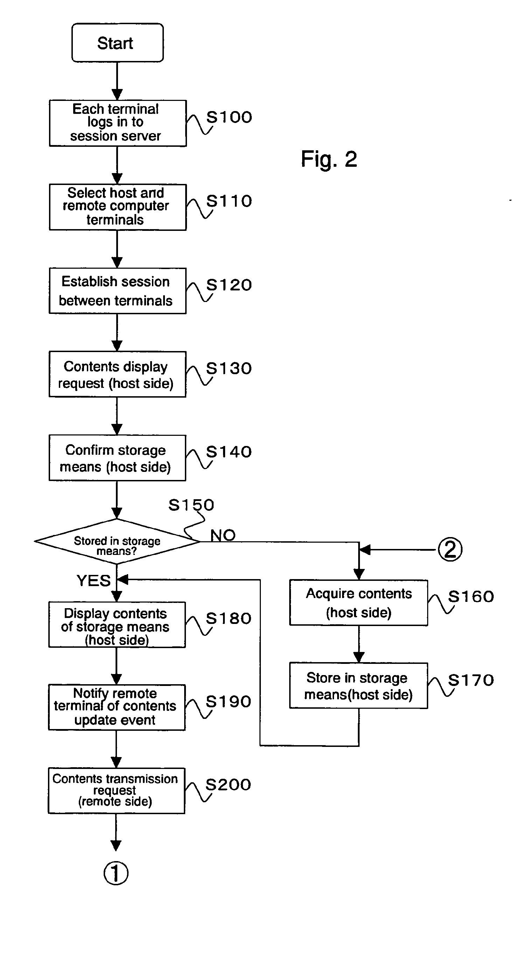

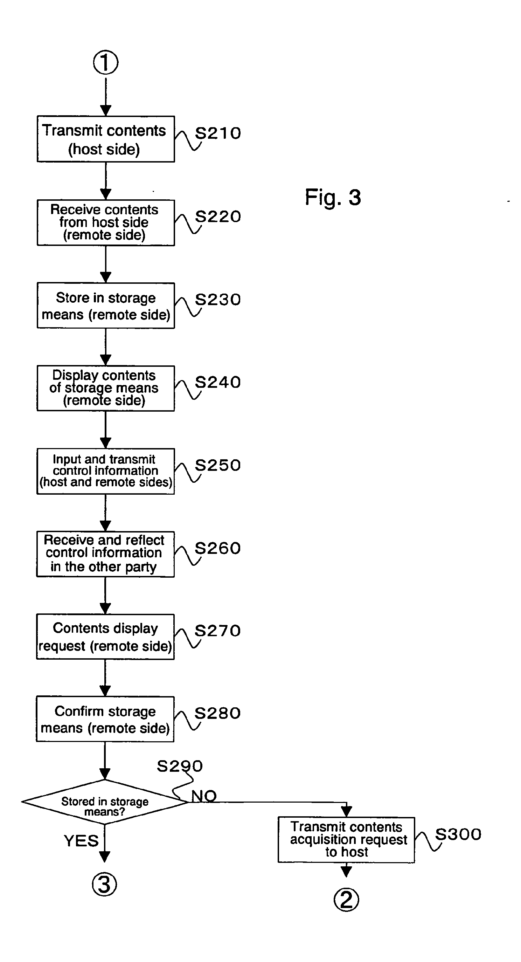

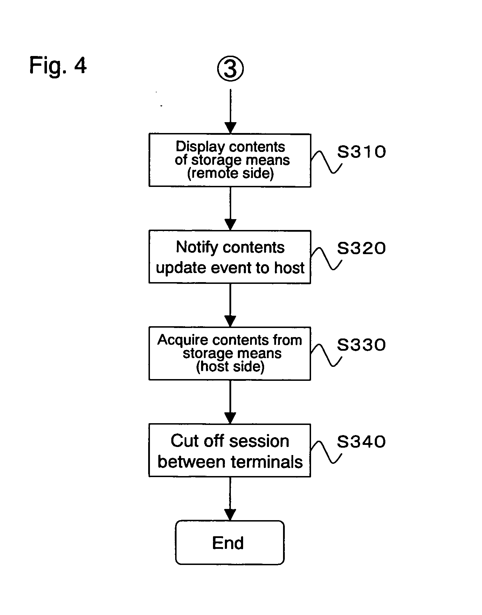

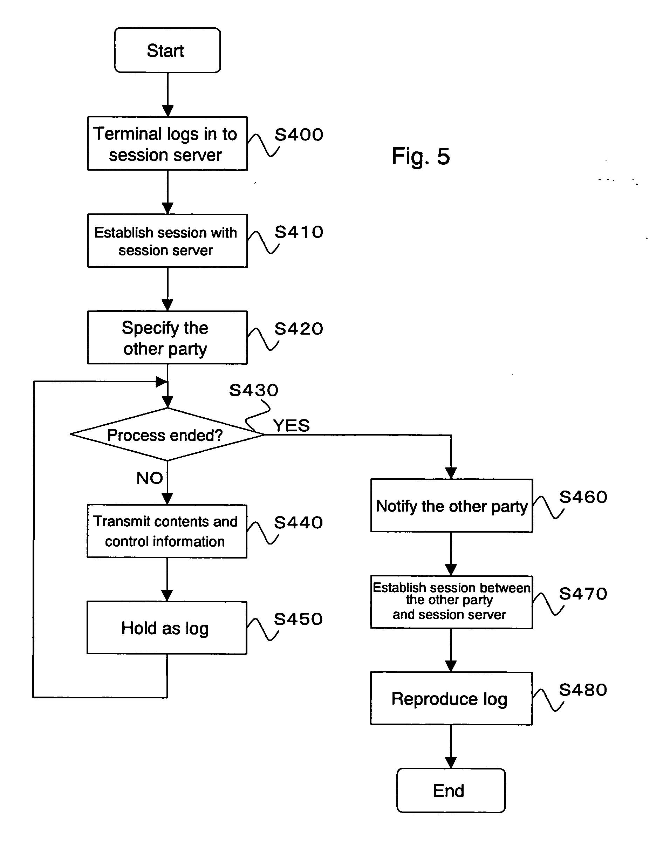

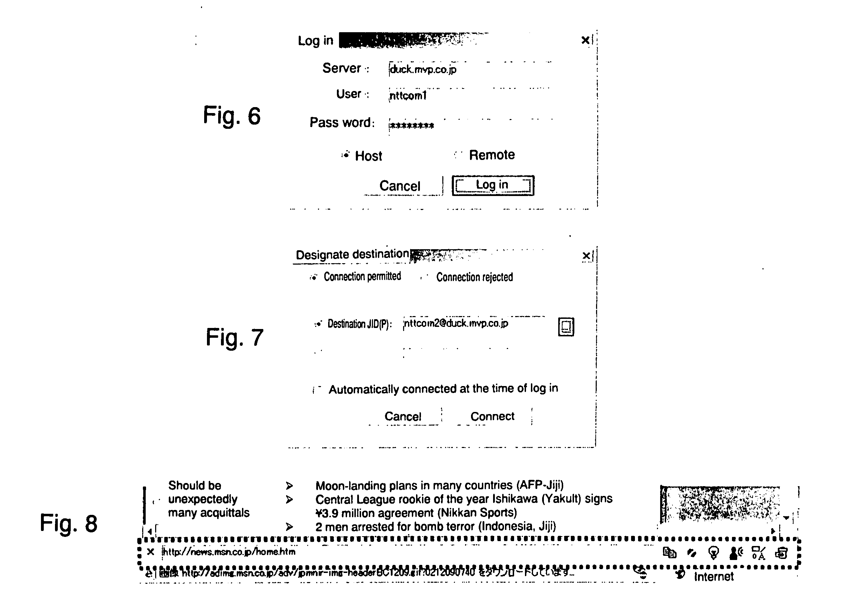

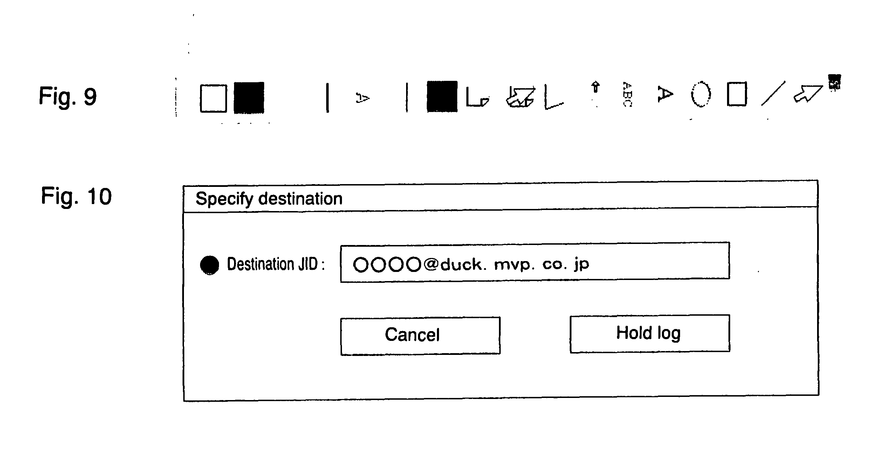

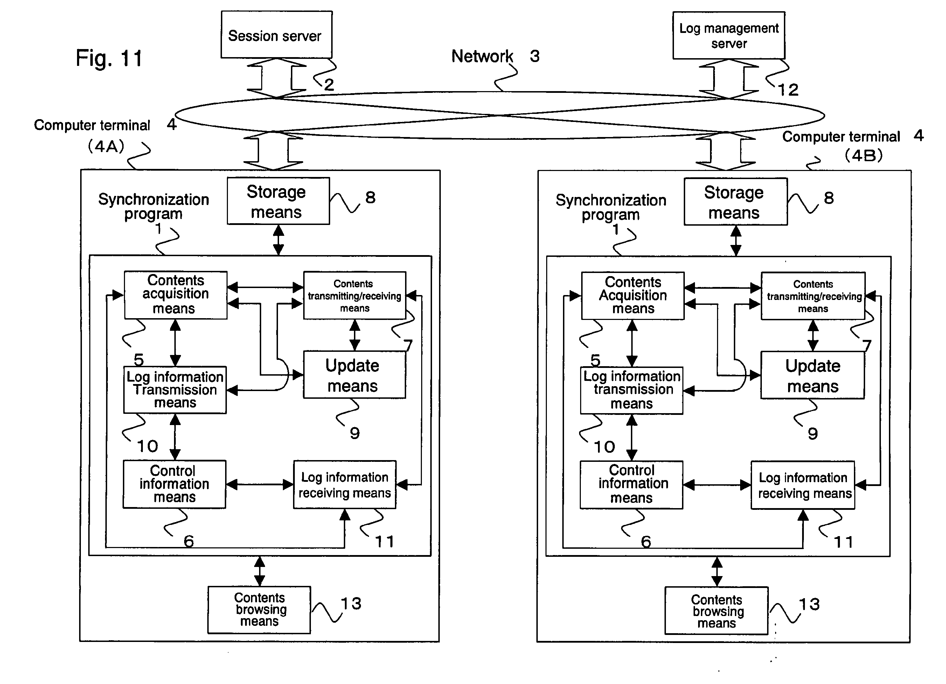

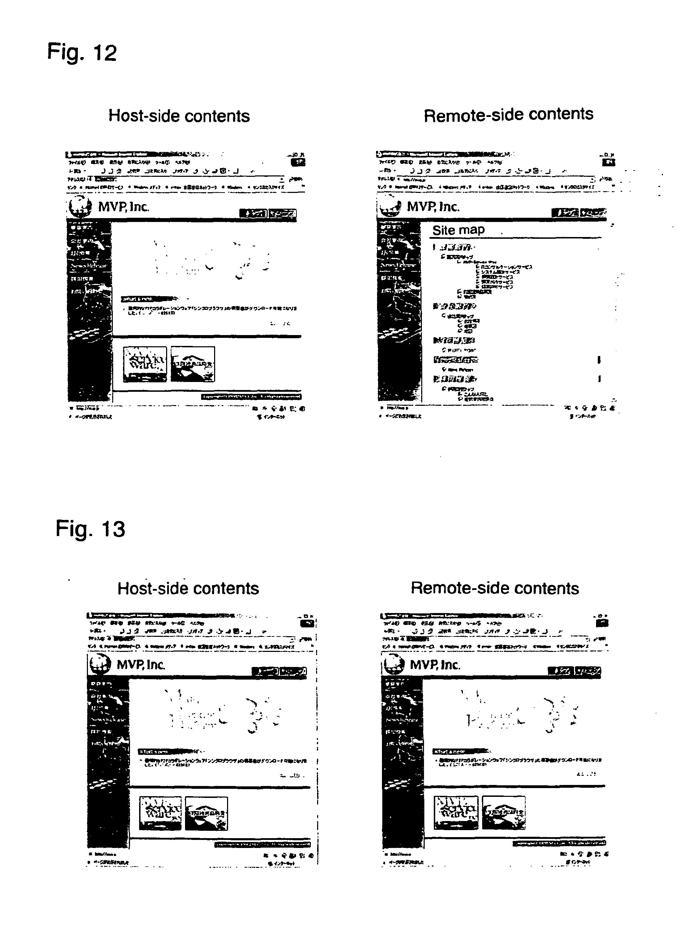

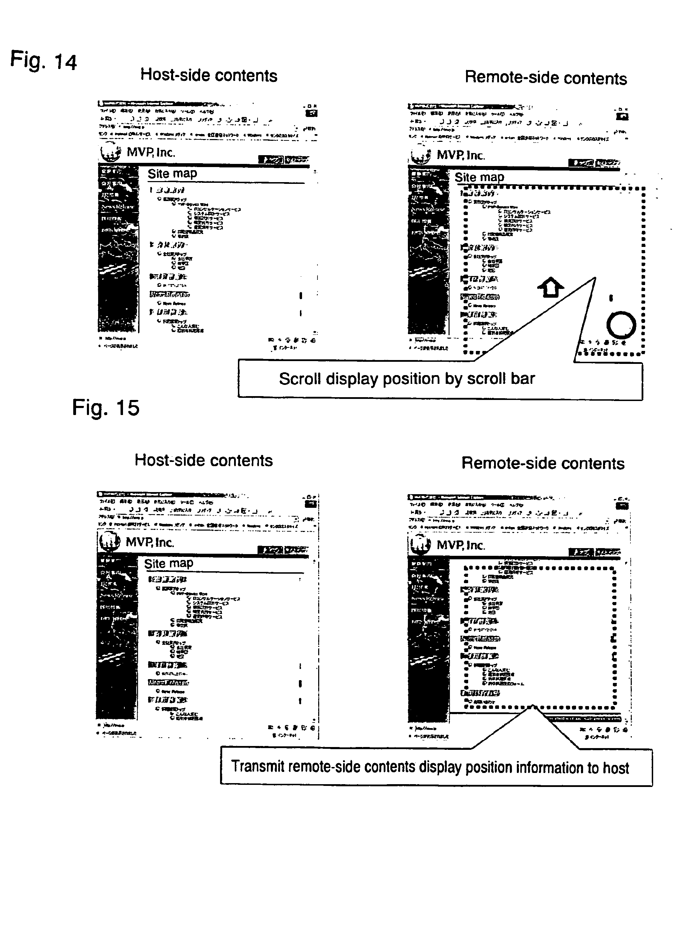

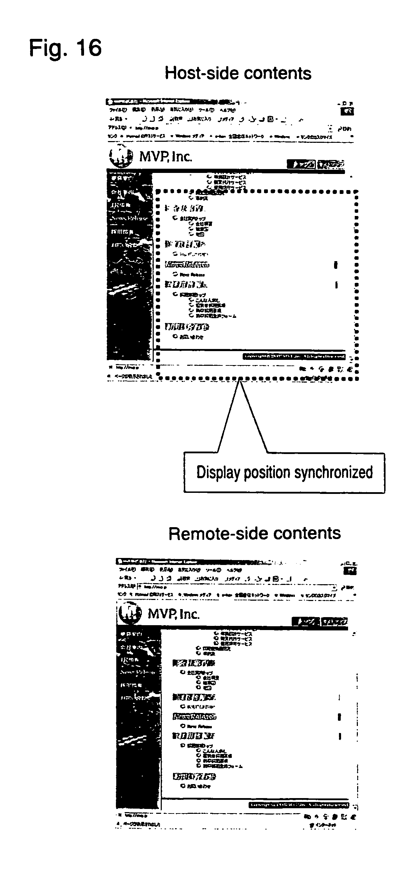

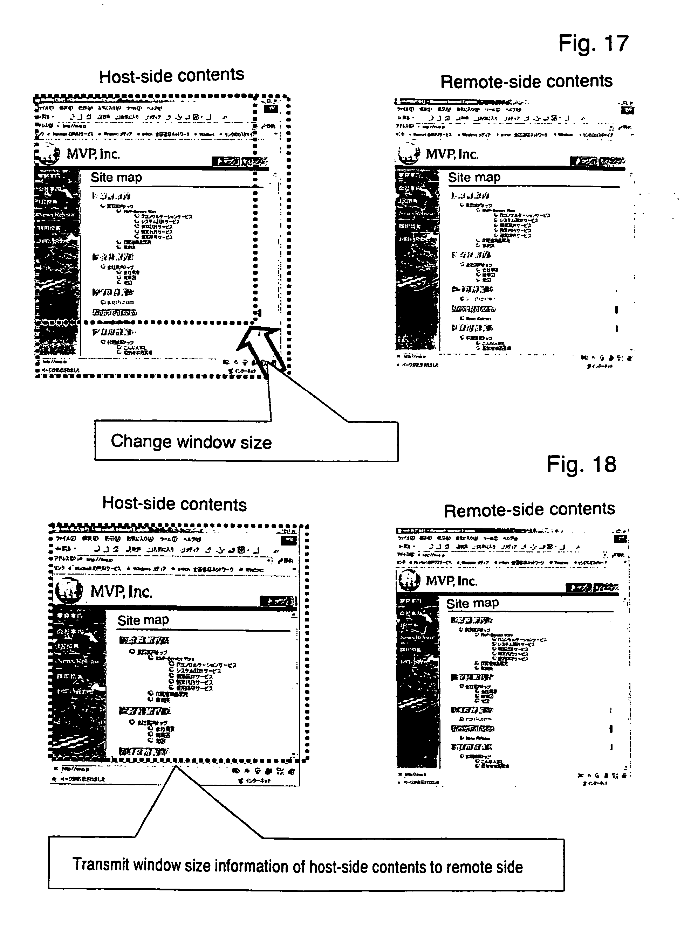

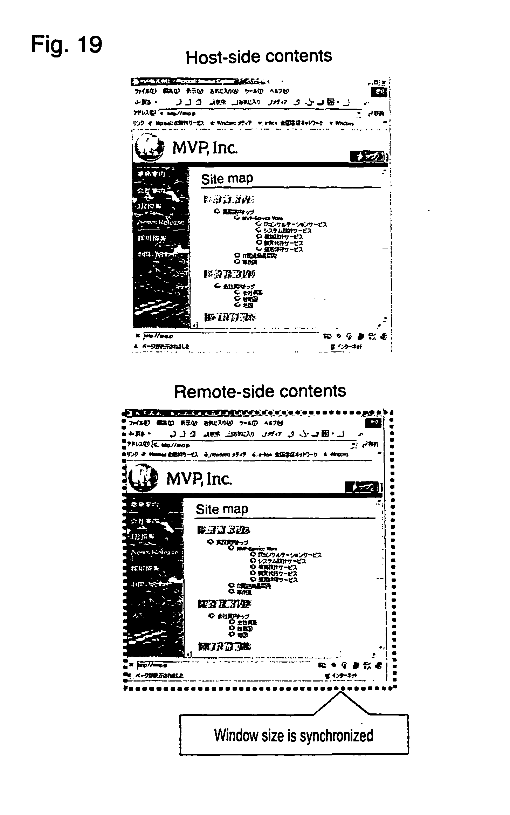

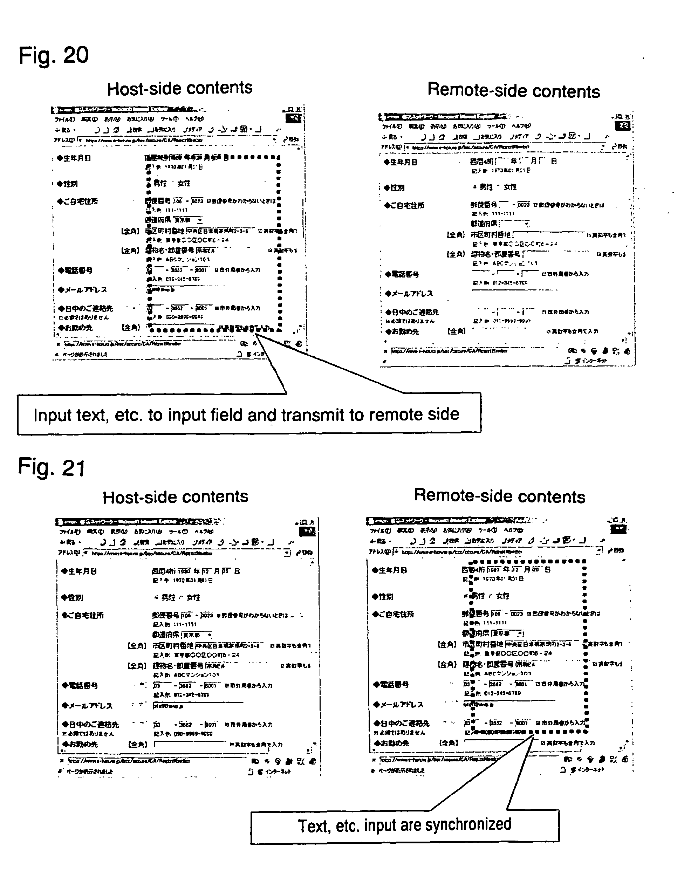

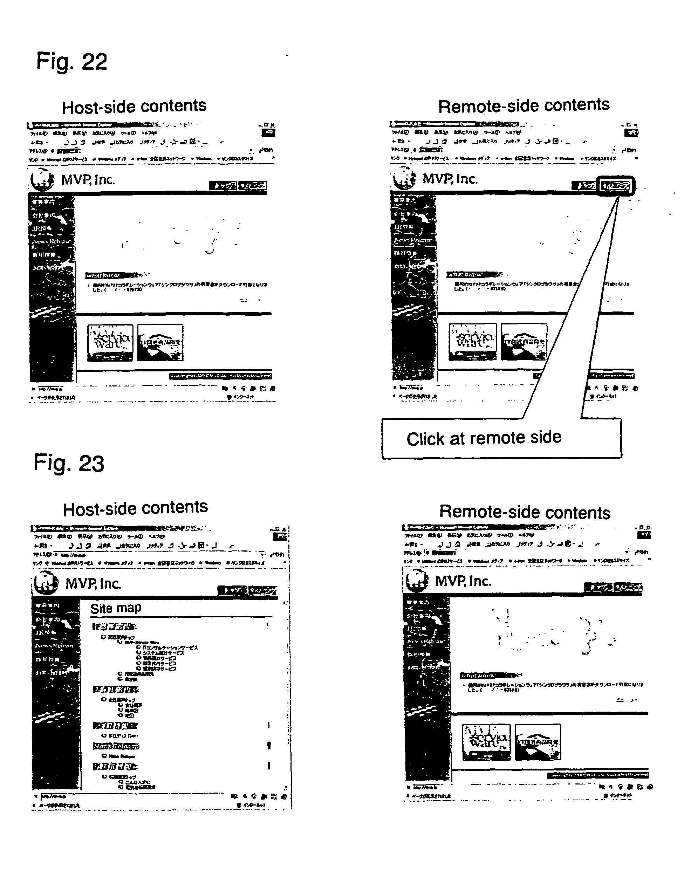

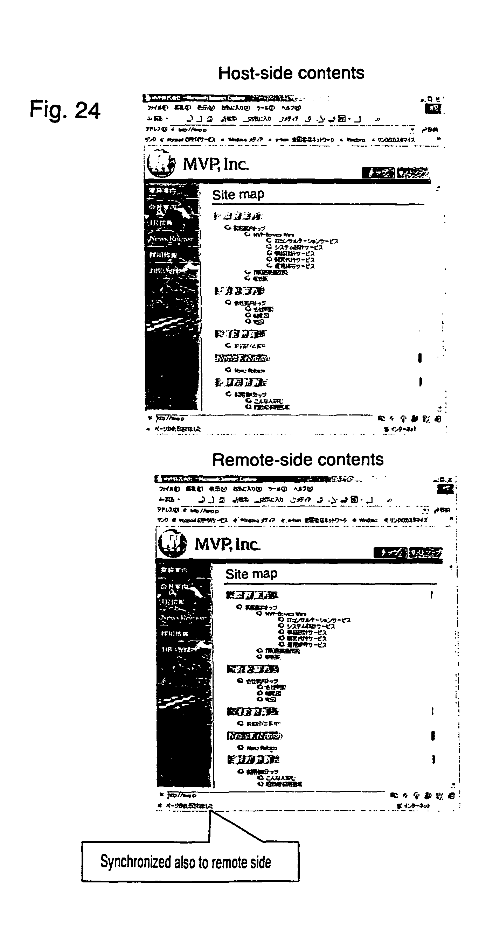

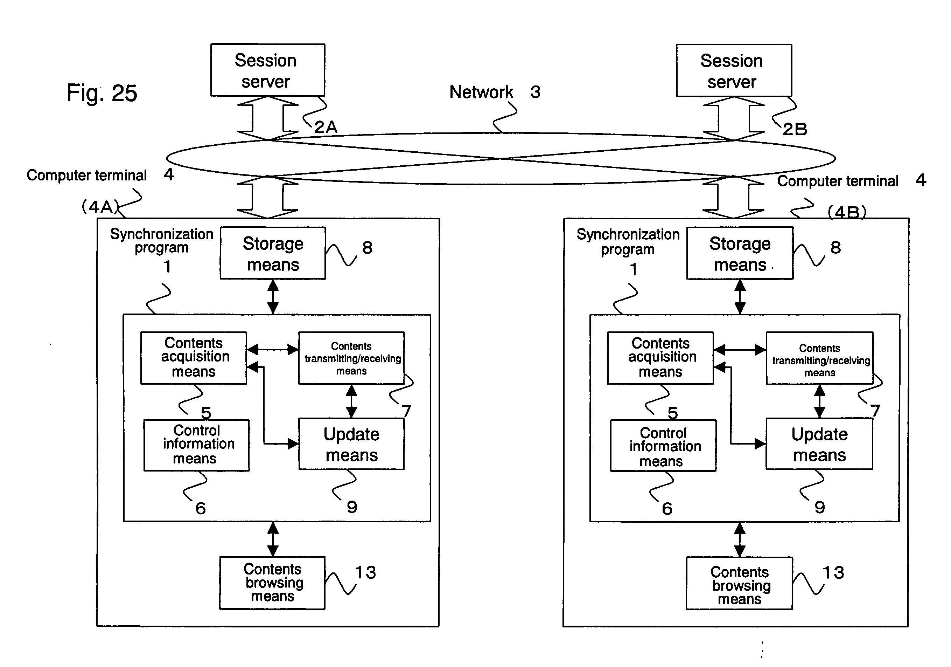

Fig. 1 is a diagram showing an example of a system configuration according to the invention. Fig. 2 is a flowchart showing an example of the process flow according to the invention. Fig. 3 is a flowchart showing an example of the process flow according to the invention. Fig. 4 is a flowchart showing an example of the process flow according to the invention. Fig. 5 is a flowchart showing another example of the process flow according to the invention. Fig. 6 is a diagram showing an example of the log-in screen. Fig. 7 is a diagram showing an example of the screen for selecting the other party. Fig. 8 is a diagram showing an example of a tool bar. Fig. 9 is a diagram showing an example of the drawing pallet. Fig. 10 is a diagram showing an example of a screen for specifying the other party. Fig. 11 is a system configuration showing another example of a system configuration according to the invention. Fig 12 is an example of the contents synchronized with the contents on remote side. Fig. 13 is an example of the contents synchronized with the contents on remote side. Fig. 14 is an example of the contents of synchronizing the scroll bar display position change as control information. Fig. 15 is an example of the contents of synchronizing the scroll bar display position change as control information. Fig. 16 is an example of the contents of synchronizing the scroll bar display position change as control information. Fig. 17 is an example of the contents of synchronizing the window size change as control information. Fig. 18 is an example of the contents of synchronizing the window size change as control information. Fig. 19 is an example of the contents of synchronizing the window size change as control information. Fig. 20 is an example of the contents of synchronizing the contents input and selection as control information. Fig. 21 is an example of the contents of synchronizing the contents input and selection as control information. Fig. 22 is an example of the contents of synchronizing the contents on host side. Fig. 23 is an example of the contents of synchronizing the contents on host side. Fig. 24 is an example of the contents of synchronizing the contents on host side. Fig. 25 is a system configuration showing an example of a system configuration of the routing between servers.

### DESCRIPTION OF REFERENCE NUMERALS

1: synchronization program, 2: session server, 3: network, 4: computer terminal, 5: contents acquisition means, 6: control information means, 7: contents transmitting/receiving means, 8: storage means, 9: update means, 10: log information transmission means, 11: log information receiving means, 12: log management server, 13: contents browsing means.

### BEST MODE FOR CARRYING OUT THE INVENTION

An example of a system configuration of the synchronization program 1 according to the invention is explained in detail with reference to the system configuration diagram of Fig. 1.

The synchronization program 1 is arranged on each computer terminal 4 capable of transmitting and receiving data to and from a session server 2 through a network 3. The computer terminal 4 has a storage means 8. The storage means 8 is a means for storing the contents acquired by a contents transmitting/receiving means 7 (described later) from other computer terminals 4, and suitably a cache. The storage means 8, however, may be any well-known storage unit such as a memory or a hard disk other than a cache.

Further, the computer terminal 4 has a well-known contents browsing means such as a web browser. The contents browsing means 13 is an application software such as a web browser for synchronization at the computer terminal 4, and this specification describes a case where it is a web browser. Nevertheless, the contents browsing means 13 may be a word processor software, a spreadsheet software or a presentation software. In this case, in addition to URL, the information indicating the file location is transmitted or received as data in place of "/" and synchronization is effected. This synchronization itself can be realized by a similar process regardless of the web browser or the word processor software.

The session server 2 is a computer terminal which, in response to a connection request from each computer terminal 4, establishes a session between the computer terminals after they log in (the session server 2, though so called herein, may alternatively be a normal computer terminal instead of a server).

The network 3 may be any one of an open network such as the internet, a closed network such as the LAN and an intranet which is a combination thereof, whether wired or wireless.

The synchronization program 1 includes the contents acquisition means 5, the control information means 6, the storage means 8, the contents transmitting/receiving means 7 and the update means 9.

The contents acquisition means 5, upon receipt from the user of a contents display request (the URL input or link selection, for example) for the contents of a specific home page, acquires the contents from the storage means 8 and causes them to be displayed using the contents browsing means 13.

Also, the contents acquisition means 5 is a means for a acquiring the contents from the storage means 8 and causes them to be displayed on the contents browsing means 13 in the case where the update means 9 (described later) receives a contents update event transmitted to the contents acquisition means 5 when the contents stored in the storage means 8 is updateed.

The control information means 6 receives the control information, such as the scroll, the change in size or position of the window or the position due to the mouse cursor movement by the user, input by the user to the contents browsing means 13 and transmits it to the computer terminal 4 of the other party through the session server 2.

The control information means 6, upon receipt of the control information from the computer terminal 4 of the other party through the session server 2, reflects it in the contents browsing means 13.

In the case where the contents requested by the contents acquisition means 5 are not stored in the storage means 8, the contents transmitting/receiving means 7 acquires the contents from another computer terminal 4 and stores them in the storage means 8. Also, upon receipt of a contents transmission request from the other-party computer terminal 4, the contents transmitting/receiving means 7 extracts the contents from the storage means 8 and transmits the contents to the other-party computer terminal 4.

In the case where the computer terminal 4 is a host computer (described later), the contents are acquired from a web server or the like (not shown) connected to the internet, etc. and stored in the storage means 8. In the case where the computer terminal 4 is a remote computer (described later), on the other hand, a request to acquire the contents is transmitted to the host computer terminal 4 for the particular session, and the contents acquired and stored in the storage means 8 by the host computer terminal 4 are received from the host computer terminal 4 and stored in the storage means 8 of the remote computer terminal 4.

The update means 9 is a means for notifying a contents update event to the computer terminal 4 or the other-party computer terminal 4, which, in the case where new contents are stored in the storage means 8, notifies the contents acquisition means 5 of the fact that the new contents are so stored. The update means 9 also receives the contents update event from the other-party computer terminal 4 and notifies it to the contents acquisition means 5. The contents update event may contain the information indicating the location of the contents such as the location of the URL or the file in addition to the fact that the contents are updated.

In this specification, the host computer terminal 4 is the one which acquires the contents from the server having stored therein the contents such as a web server (not shown) through the network 3, while the remote computer terminal 4 is the one which gives a contents acquisition request to the host computer terminal 4 and acquires the contents from a cache having the contents stored therein.

Next, an example of the process flow according to the invention is explained in detail with reference to the flowcharts of Figs. 2 to 4 and the system configuration shown in Fig. 1. According to this embodiment, an explanation is given about a case in which the host computer first gives a request to acquire the contents from a web server (not shown) of the internet or the like, and after displaying the contents, the host or remote computer terminal 4 performs some control operation. After that, the remote computer terminal 4 gives a request to acquire the contents from a web server (not shown) of the internet or the like, which contents are then displayed. In Fig. 1, the host computer terminal 4 is designated by 4A, and the remote computer terminal 4 by 4B.

The user of the computer terminal 4A and the computer terminal 4B designates the session server 2 from the log-in screen as shown in Fig. 6, and further inputs the user name and the pass word, thereby logging in to the session server 2 (S100), while at the same time selecting to be a host or a remote terminal (S110).

In the above-mentioned case, the user logs in to the session server 2 designated on the log-in screen. By providing a plurality of session servers 2 of different addresses on the network 3, therefore, the log-in to an arbitrary session server 2 is possible. In the case shown in Fig. 6, the user selects the host side or the remote side when logging in. Nevertheless, this selection may be made after log-in operation.

After log-in, the computer terminal 4A or 4B selects the other-party computer with which to establish a session and synchronize, from the other-party selection screen as shown in Fig. 7, thus establishing the session between the computer terminal 4A and the computer terminal 4B (S120) . As described above, assume that a session has been established with the computer terminal 4A being as a host computer terminal and with the computer terminal 4B being as a remote computer terminal. In this case, assume that the contents as shown in Fig. 12 are displayed on the host computer terminal 4A and the remote computer terminal 4B.

A detailed explanation is given about the routing between servers through the session server 2 in the case where the other-party computer terminal 4 is not a user associated with the same session server 2, i.e. the user is associated with another session server 2 at the time of establishing the session at step S120. An example of a system configuration for this case is shown in Fig. 25. In the case of Fig. 25, the computer terminal 4A (or the user thereof) is registered as a user of the session server 2A, and the computer terminal 4B (or the user thereof) is registered as a user of the session server 2B.

First, the user of the computer terminal 4A, through the process of steps S100 to S110, logs in to the session server 2A. Similarly, the user of the computer terminal 4B logs in to the session server 2B through the process of steps S100 to S110. This embodiment represents a case in which each user logs in to each session server 2. In the case where the other party fails to log in, however, the process stands by until the other-party computer terminal 4 logs in to the session server 2.

Each user, after log in, designates the server name of the other-party session server 2 and the user ID (or the server name of the session server 2B and the computer terminal 4B or the user ID of the user thereof, in the case where the access is made by the computer terminal 4A), and from the synchronization program 1 of the computer terminal 4 thereof, gives a connection request to the session server 2 to which the user has logged in. In the case where the computer terminal 4A makes access, a connection request is given to the session server 2A from the synchronization program 1 of the computer terminal 4A.

In the process, the session server 2 manages the server list of other session servers 2 to which the session server 2 is connectable. This server list is added, corrected, deleted or otherwise processed by the server manager, and has registered therein the server name of the session server 2 and the location and the destination on the network 3 of the session server 2.

The session server 2 not designated, upon receipt of a connection request from the synchronization program 1 of the computer terminal 4, makes reference to the server list and transfers the connection request through the network 3 to the session server 2 of the coincident server name. The reference to the server list, even if it is not held by the session server 2, may be realized by accessing other servers which manages the list.

In the case described above, the session server 2A makes reference to the server list and transfers the connection request through the network 3 to the coincident server name (the server name of the session server 2B).

Another session server 2 to which the connection request has been transferred from the session server 2, upon confirming that the synchronization program 1 of the user ID requested is coincident with the user ID registered and is being logged therein, notifies the connection request to the computer terminal 4 having the log-in synchronization program 1 of the user ID.

In the above-mentioned case, the session server 2B is the user ID in which the synchronization program 1 of the requested user ID is registered, and upon confirming that the user ID is logged in, notifies the connection request to the computer terminal 4B having the log-in synchronization program 1 of the user ID.

Through this process, even with the computer terminals 4 having the synchronization programs 1 and being associated with different session servers 2, both the synchronization programs 1 recognize the other party, thereby making it possible to conduct session communication.

In the case where the user of the host computer terminal 4A inputs a URL and thus issues a contents display request to the contents browsing means 13 (S130), the contents acquisition means 5 of the computer terminal 4A confirms whether the contents corresponding to the contents display request are stored in the storage means 8 of the computer terminal 4A (S140). The URL input (i.e. the URL to be synchronized) at this stage is displayed on a tool bar as shown in Fig. 8.

In the case where the contents are not stored in the storage means 8, the computer terminal 4A is a host and therefore the contents transmitting/receiving means 7 of the computer terminal 4A acquires the contents from the web server, etc. (not shown) connected to the internet, etc. (S160), and stores it in the storage means 8 on the host side of the computer terminal 4A (S170).

After the contents are stored in the storage means 8 on the host side at step S170 or upon confirmation at step S140 that the contents are stored in the storage means 8, the contents acquisition means 5 of the computer terminal 4A acquires the contents from the storage means 8 and causes them to be displayed using the contents browsing means 13 (S180).

Also, the update means 9 of the computer terminal 4A notifies the contents update event to the other-party computer terminal 4B (S190).

The update means 9 of the computer terminal 4B that has received the notification of the contents update event from the computer terminal 4A notifies the contents update event to the contents acquisition means 5 of the computer terminal 4B.

The contents acquisition means 5 of the computer terminal 4B confirms whether the contents are stored or not in the storage means 8 of the computer terminal 4B. Since the contents are not so stored (apparently not stored and therefore this confirmation may not be conducted), the contents transmitting/receiving means 7 gives a contents transmission request to the contents transmitting/receiving means 7 of the computer terminal 4A (S200).

The contents transmitting/receiving means 7 of the computer terminal 4A that has receives the contents transmission request extracts the contents from the storage means 8 of the computer terminal 4A and transmits them to the computer terminal 4B that has requested the transmission (S210).

The contents transmitting/receiving means 7 of the computer terminal 4B, upon receipt of the contents from the contents transmitting/receiving means 7 of the computer terminal 4A (S220), stores the contents in the storage means 8 (S230), and the contents acquisition means 5 of the computer terminal 4B acquires the contents from the storage means 8 and causes them to be displayed using the contents browsing means 13 (S240). The case in which the contents of Fig. 12 are synchronized as described above is shown in Fig. 13.

In the case where the contents are displayed at the host computer terminal 4A through the process flow described above, the same contents can be displayed also at the remote computer terminal 4B. Also, the link destination may be selected (clicked) without inputting the URL. In this case, too, the user is caused to recognize the synchronism by displaying the URL to be synchronized on the tool bar in Fig. 8.

Next, an explanation is given about a case in which the control information is input at the computer terminal 4A or the computer terminal 4B.

The host computer terminal 4A and the remote computer terminal 4B display the same contents. In the case where the user of any one of the computer terminals 4 inputs the control information to change the size or position of the scroll or window, for example, into the contents browsing means 13 (in the case where the contents of the remote computer terminal 4B are controlled to change the display position with the scroll bar in Fig. 14), then the control information means 6 of the computer terminal 4 receives and transmits it to the other-party computer terminal 4 through the session server 2 (S250). In other words, in the case of Fig. 14, the display position information of the contents on the remote side is transmitted as control information. This is shown in Fig. 15.

As an alternative, the position information due to the movement of the mouse cursor by the user may be received by the control information means 6 of the computer terminal 4 as control information and transmitted to and displayed on the other-party computer terminal 4 through the session server 2. Specifically, the relative positions of the screen, the active window and the mouse cursor in the active window on the screen of the computer terminal 4 or the absolute positions thereof in the screen are acquired and transmitted as position information of the mouse cursor.

Upon receipt of the control information from the other-party computer terminal 4 through the session server 2, the control information means 6 reflects the received control information in the contents browsing means 13 (S260) . In the case where the control information is the vertical motion of the scroll bar, for example, the scroll bar is moved also vertically in the contents browsing means 13 of the other-party computer terminal 4, and in the case where the size or position of the window is changed, the size or position, as the case may be, of the window is changed also in the contents browsing means 13 of the other-party computer terminal 4. Also, in the case where the control information is the position information on the movement of the mouse cursor, the position including the movement of the mouse cursor is indicated (specifically, since the relative position or the absolute position on the screen is acquired as the position information of the mouse cursor, the corresponding position on the screen is calculated and displayed as relative or absolute position). In the process , the positions before and after movement may be displayed or the movement may be displayed. In the case of Figs. 14, 15, the display position information is received as control information, and the control information means 6 synchronizes the contents display position at the host computer terminal 4A. This is shown in Fig. 16.

Another case in which the window size of the contents is changed at the host computer terminal 4A is shown in Fig. 17. Once this change is done, the control information means 6 transmits the window size information of the host as control information to the remote computer terminal 4B. This case is shown in Fig. 18. The control information means 6 of the remote computer terminal 4B that has received the control information of the window size information from the host computer terminal 4A, based on the control information, synchronizes by changing the window size of the contents. This is shown in Fig. 19.

Through this process, the control information input to the contents browsing means 13 of the computer terminal 4 can be reflected also in the other-party computer terminal 4.

Further, this control information, in addition to the movement of the scroll bar, the change of window size or position and the display of the mouse cursor position, displays the drawing pallet as shown in Fig. 9, for example, together with the contents browsing means 13 . From this drawing pallet, the user selects the straight line, rectangle, ellipse, letters, marker pen, bit map pasting, polygon, pattern erasure, total screen erasure, color selection, line type selection, character font selection, bit map selection, fill pattern selection, fill pattern color selection or the like drawing types, which are used to draw on the contents. In this way, a similar drawing may be done on the contents for the other-party computer terminal 4.

Specifically, a transparent screen is drawn on the contents to detect the coordinate position of the drawing in the contents, and the straight line, rectangle, ellipse, etc. are drawn thereon by the user as described above. The coordinate of the drawing thus made (preferably, the relative coordinate in the contents, and alternatively may be the absolute coordinate in the screen) is detected on a transparent screen. These drawing contents (the relative coordinate of the drawing, straight line, rectangle, ellipse, letters, marker pen, bit map pasting, polygon, pattern erasure, total screen erasure, color selection, line type selection, character font selection, bit map selection, fill pattern selection, fill pattern color selection and the like drawing types) are transmitted to the other-party computer terminal 4 as at S250 by the control information means 6.

The control information means 6 of the other-party computer terminal 4, based on the drawing type and the relative coordinate (or the absolute coordinate) in the received drawing contents, draws the screen with the contents browsing means 13 of the computer terminal 4.

The control information also includes the synchronization for inputting the text or the like to the contents input field as in the input service. This case is shown in Fig. 20. Fig. 20 shows the case in which a text is input to the input field of the contents of the host computer terminal 4A and selected from the pulldown menu. In this case, what is input and selected to which input field or from which pulldown menu is used as control information and transmitted to the remote computer terminal 4B by the control information means 6. The control information means 6 of the remote computer terminal 4B that has received this control information is reflected in the contents based on the received control information. This case is shown in Fig. 21. By doing so, the synchronization is made possible even in the case of input service.

Next, the process flow is explained for the case in which a contents acquisition request is made in the remote computer terminal 4B.

Assume that the user of the remote computer terminal 4B issues a contents display request to the contents browsing means 13 by inputting the URL or selecting (clicking) the link destination from the contents shown in Fig. 22 (S270). The contents acquisition means 5 of the computer terminal 4B confirms whether the contents corresponding to the contents display request are stored in the storage means 8 of the computer terminal 4B (S280). Fig. 22 shows the case in which the link destination is selected (clicked). Once the URL for synchronization is selected in this way, the particular URL is displayed in the tool bar shown in Fig. 8.

Assume that the contents are not stored in the storage means 8 (S290). Since the computer terminal 4B is a remote terminal, the contents transmitting/receiving means 7 of the computer terminal 4B transmits the contents acquisition request to the host computer terminal 4 in the session (S300), while the contents acquired by the host computer terminal 4 and stored in the storage means 8 are received from the host computer terminal 4 and stored in the storage means 8 of the remote computer terminal 4. In other words, the process of and subsequent to step S160 is executed.

In other words, in the case where the contents are not stored in the storage means 8 of the remote computer terminal 4B, the same contents are not in the storage means 8 of the host computer terminal 4A either (since the computer terminals 4 are synchronized with each other by the process described above). Thus, the host computer terminal 4A acquires the contents from an external web server or the like, which contents are stored in the storage means 8 of both the computer terminal 4A and the computer terminal 4B. By storing the contents in the storage means 8 of both computer terminals, the same contents can be displayed at the computer terminal 4A and the computer terminal 4B.

In the process, as shown in Fig. 23, the contents are first displayed at the host computer terminal 4A. After that, the remote computer terminal 4B that has received the contents update event from the host computer terminal 4A displays the contents for synchronization. This case is shown in Fig. 24.

In the case where the confirmation at step S280 shows that the contents are stored in the storage means 8, the contents acquisition means 5 of the computer terminal 4B acquires the contents from the storage means 8 and causes them to be displayed using the contents browsing means 13 (S310).

Also, the update means 9 of the computer terminal 4B notifies the contents update event to the other-party computer terminal 4A (S320).

The update means 9 of the computer terminal 4A that has received the notification of the contents update event from the computer terminal 4B notifies the contents update event to the contents acquisition means 5 of the computer terminal 4A.

The contents acquisition means 5 of the computer terminal 4A confirms whether the contents are stored or not in the storage means 8 of the computer terminal 4B. In the case where the contents are stored in the storage means 8 of the computer terminal 4B, it means that the same contents are also stored in the storage means 8 of the computer terminal 4A. Thus, the contents acquisition means 5 extracts the contents from the storage means 8 of the computer terminal 4A and causes them to be displayed using the contents browsing means 13 (S330).

In the case where the contents are displayed at the remote computer terminal 4B through the process flow described above, the same contents can be displayed at the host computer terminal 4A.

By appropriately repeating the corresponding portion of the process flow described above, the synchronization of the contents between the host and remote terminals is executed between the computer terminals 4, so that in the case where any user conducts a predetermined final work, the session between the computer terminals 4 is cut off and the synchronization program 1 is ended (S340).

Next, with reference to the system configuration diagram of Fig. 11, a detailed explanation is given about a case in which in spite of the fact that the user has logged in from one of the computer terminals 4, the user of the other-party computer terminal 4 has not logged in and therefore the synchronization cannot be carried out, so that the synchronization log is held for the user of the other-party computer terminal 4. For simplicity of explanation, the same parts as in the embodiments described above are not described again.

The network 3 includes a management server 12 for holding and managing the log, and data can be transmitted and received among the session server 2, the computer terminal 4 and the synchronization program 1.

The synchronization program 1, in addition to the system configuration shown in Fig. 1, has a log information transmission means 10 and a log information receiving means 11.

The log information transmission means 10 receives the contents display request and the control information input to the contents browsing means 13 and transmits them to the log management server 12. In other words, in the case where a contents acquisition request is issued by the user inputting the URL, etc. to the contents browsing means 13 , the URL, etc. is transmitted to the log management server 12. In the case where the control information is input, on the other hand, the movement of the scroll bar or the change in window size or position of the drawing contents are transmitted to the log management server 12.

The log information receiving means 11, when logged in to the session server 2, when the log exists in the log management server 12, receives and executes it through the contents browsing means 13.

In the case where there was a contents acquisition request as a log, for example, the URL, etc. thereof is received by the log information receiving means 11 and transmitted to the contents acquisition means 5. The contents acquisition means 5 confirms whether the contents such as the URL are stored in the storage means 8, and in the case where the contents are so stored, extracts them from the storage means 8. In this way, the contents are displayed through the contents browsing means 13. In the case where the contents are not stored in the storage means 8, on the other hand, the contents transmitting/receiving means 7 accesses the web server of the URL, etc., acquires the contents, and after storing them in the storage means 8, displays them through the contents browsing means 13.

In the case where the log information receiving means 11 receives the control information, the control information is reflected by the control information means 6 through the contents browsing means 13 based on the control information thus received. In the case where the control information is the movement of the scroll bar or the change in size or position of the window, for example, the scroll bar is moved or the size or position of the window is changed, as the case may be. In the case where the control information concerns the drawing contents, on the other hand, the drawing is executed based on the drawing contents in the contents browsing means 13.

Next, an example of the process flow is explained in detail with reference to the flowchart of Fig. 5 and the system configuration diagram of Fig. 11.

The user of the computer terminal 4A or the computer terminal 4B designates the session server 2 from the log-in screen as shown in Fig. 6, and further inputs the user name and the pass word thereby to log in to the session server 2 (S400).

In the case where the other-party computer terminal 4 has not yet logged in and the session cannot be established with the computer terminal 4 after log-in, the user of the computer terminal 4 establishes a session with the logmanagement server 12 (S410).

After a session with the log management server 12 is established, the other party for holding the synchronization log is specified from the other-party specifying screen as shown in Fig. 10. In the case shown in Fig. 10, the address of the other party is "000@duck.mvp.co.jp" .

After specifying the other party, the user of the computer terminal 4A or the computer terminal 4B (i.e. the user who has logged in, however, the user of the other-party computer terminal 4 is absent.) inputs the contents display request and the control information to the contents browsing means 13 until the end of the log holding (S430), which information is received by the log information transmission means 10 and transmitted to the log management server 12 (S440).

The log management server 12 that has received the information holds it as a log for the other party specified at step S420 (S450).

S440 and S450 are repeated until the user ends the holding of the log.

After this process, the log management server 12 notifies by electronic mail to the other-party computer terminal 4 that the log is held (S460). In addition to the notification by electronic mail, the log holding may be notified to the session server 2 to which the other party belongs in the case where the other party specified at S420 has logged in.

As the result of notification at S460, the other party is informed that the log is held for him. Therefore, the other party, as in S400 and S410, establishes the session with the log management server 12 (S470).

After the session is established, the log management server 12 transmits the log to the other party from time to time (S480). The log thus transmitted is received by the log information receiving means 11 of the other-party computer terminal 4, and executed by the contents acquisition means 5 or the control information means 6.

In the case where a contents acquisition request is issued as a log, for example, the URL thereof is received by the log information receiving means 11 and transmitted to the contents acquisition means 5. The contents acquisition means 5 confirms whether the contents such as the URL are stored in the storage means 8, and in the case where the contents are so stored, extracts them from the storage means 8 and displays them through the contents browsing means 13. In the case where the contents are not stored in the storage means 8, on the other hand, the contents transmission/receiving means 7 accesses the web server of the URL, etc. , acquires the contents, and after storing them in the storage means 8, displays them through the contents browsing means 13.

In the case where the log information receiving means 11 has received the control information, the control information means 6 reflects the control information through the contents browsingmeans 13 basedon the control information thus received. In the case where the control information is the movement of the scroll bar or the change in size or position of the window, for example, the scroll bar is moved or the size or position of the window is changed, as the case may be, while in the case where the control information is the drawing contents, the drawing is carried out based on the drawing contents in the contents browsing means 13.

Through the process flow described above, even in the case where the other party cannot log in to the session server 2 simultaneously as shown in Figs. 2 to 4, the same contents and control information can be displayed at the other-party computer terminal 4.

According to this embodiment, the session server 2 and the log management server 12 are shown as separate severs. Nevertheless, the session server 2 may of course have the function of the log management server 12, thereby combining both into a physically and functionally integrated server.

The synchronization program 1 described above exhibits the effects thereof greatly if used for the input service or support on the network 3. Especially in the case of the input service for the on-line shopping, a protocol such as SSL (Secure Sockets Layer) may be used to maintain security in the network 3. When this protocol is used, the contents of the communication on the network 3 are required to be encrypted or otherwise kept confidential. The host computer terminal 4 can directly communicate with the web server by SSL. The remote computer terminal 4, however, acquires the contents from the storage means 8 of the host computer terminal 4, and therefore cannot carry out communication by SSL.

In the case of the input service for the on-line shopping described above, for example, the user having the problem of not knowing how to input seeks the input service from the support center as a remote terminal. Thus, the contents requiring confidentiality such as the credit card number are exchanged between the host computer terminal 4 of the user and the remote computer terminal 4 of the support center. Under such circumstances, however, ordinary text data are simply exchanged and it is difficult to maintain confidentiality.

In the case where the host uses the SSL with the web server, therefore, the communication is carried out by SSL also between the host computer terminal 4 and the remote computer terminal 4 (or more specifically, between the host computer terminal 4 maintaining a session and the session server 2 and between the remote computer terminal 4 and the session server 2). As a result, the confidentiality of the entire communication can be secured.

In the case of the input service such as for the on-line shopping as described above, assume that an application for goods made from the remote computer terminal 4 of the support center is detected by the session server 2. An alarm is displayed at the host computer terminal 4 of the user. In this way, the application for goods without permission from the support center is prevented. In this case, the application for goods can be approved by the user thereby to grant the particular commodity proposal.

The function of each means according to this invention is simply discriminated logically, and all the means may occupy the same area physically or virtually.

In embodying the invention, the storage medium for recording the software program for implementing the functions of the embodiments thereof can of course be supplied to the system so that the computer of the system reads the program stored in the storage medium.

In this case, the very program read from the storage medium implements the functions of the embodiments described above, and the storage medium for storing the program of course makes up the invention.

The storage medium for supplying the program may include a magnetic disk, a hard disk, an optical disk, a magnetooptic disk, a magnetic tape or a nonvolatile memory card. As an alternative to the storage medium, a carrier wave for supplying the program through an electric communication line or any device or computer for recording the program may be employed.

Of course, the functions of the embodiments described above are implemented not only by executing the program read by the computer, but by the process in which the operating system working on the computer executes a part or the whole of the actual process based on the program instruction.

Further, the invention is applicable to a case in which the program read from the storage medium is written into a nonvolatile or volatile storage means of a function extension board inserted in the computer or a function extension unit connected to the computer, after which the arithmetic processing unit of the function extension board or the function extension unit, as the case may be, executes a part or the whole of the actual process in response to the program instruction thereby to implement the functions of the embodiments described above.

### INDUSTRIAL APPLICABILITY

According to this invention, unlike the conventional collaboration server, the contents can be synchronized between the computer terminals without holding the contents on the server. Also, the session server according to the invention acts only as an intermediary of a session without holding the contents. Even in the case where a multiplicity of users execute the process of synchronizing the contents in parallel, therefore, no heavy load is imposed unlike in the conventional collaboration server, and a session server not high in performance is made possible, thereby making it possible to provide an inexpensive system structure.

Further, in the prior art, the contents are held by the collaboration server and therefore the contents can be synchronized by the computer terminals only under the control of the collaboration server. The sole function of the session server, on the otherhand, is to manage the session, and therefore the routing between servers is easily realized. As a result, arbitrary terminals on the internet can synchronize with each other free of the control of a specified collaboration server.

Also, even in the case where the other-party computer terminal has not logged in to the session server, the contents to be synchronized are held as a log and transmitted from the session server to the other-party computer terminal. In this way, the other-party computer terminals who has not accessed simultaneously can be caused to browse the contents.

## Claims

1. A synchronization program for causing a computer terminal having a storage means to store at least one or more content to function in such a manner as to synchronize the contents with one or more other computer terminal to be synchronized with which a session is established through a session server, **characterized in that**:
the synchronization program causes the computer terminal to function as
a contents acquisition means for acquiring and displaying the contents stored in the storage means,
a contents transmitting/receiving means for acquiring and storing in the storage means the contents of which a display request is received from the other computer terminal, and
an update means for notifying a contents update event to the contents acquisition means or the other computer terminal in the case where new contents are stored in the storage means;
the synchronization program causes, by the contents acquisition means, the computer terminal to function in such a manner that
in the presence of the contents requested for display in the storage means, to acquire and display the contents stored in the storage means, and
upon receipt of the notice of the contents update event, to acquire and display the contents corresponding to the contents update event and stored in the storage means, and
the synchronization program causes, by the contents transmitting/receiving means, the computer terminal to function in such a manner that
in the absence of the contents requested for display or the contents corresponding to the contents update event in the storage means, to acquire the contents from other computer than the computer terminal and store them in the storage means.

2. A synchronization program as described in claim 1, **characterized in that** the computer terminal is caused to function in such a manner that
in the case where the computer terminal is a host side of the session,
the contents transmitting/receiving means acquires the contents from any other computer terminal than the computer terminal connected to the network and stores the contents in the storage means,
the contents are displayed by the contents acquisition means,
the update means notifies the contents update event to the other computer terminal, and
the contents transmitting/receiving means receives the contents transmission request from the other computer terminal, thereby transmitting the contents stored in the storage means to the other computer terminal and causes the contents to be displayed at the other computer terminal which is a remote side of the session.

3. A synchronization program as described in claim 1 or 2, **characterized in that** the computer terminal is caused to function in such a manner that
in the case where the computer terminal is a remote side of the session and the contents requested for display are not stored in the storage means,
the contents transmitting/receiving means transmits the contents acquisition request to the other computer terminal which is a host side of the session,
the update means receives the contents update event from the other computer terminal which is a host side of the session,
the contents transmitting/receiving means transmits the contents transmission request to the other computer terminal, receives the contents from the other computer terminal and stores the contents in the storage means of the computer terminal, and
the contents acquisition means displays the contents.

4. A synchronization program as described in any one of claims 1 to 3, **characterized in that** the computer terminal is caused to function in such a manner that
in the case where the computer terminal is a remote side of the session and the contents requested for display are stored in the storage means,
the contents acquisition means acquires the contents from the storage means and displays the contents, and
the update means notifies the contents update event to the other computer terminal which is a host side of the session and causes the contents stored in the storage means of the other computer terminal to be displayed at the other computer terminal.

5. A synchronization program as described in any one of claims 1 to 4, **characterized in that** the synchronization program causes the computer terminal to function as
a control information means for receiving the input of the control information for the contents of the contents browsing means, transmitting the control information to the other computer terminal through the session server, and based on the input of the control information at the other computer terminal, receiving the control information transmitted from the other computer terminal, and reflecting the control information in the contents of the contents browsing means.

6. A synchronization program as described in claim 5, **characterized in that**
the control information includes any one of the movement of the scroll bar, the change in size or position of the window, the drawing of the contents and the movement of the mouse cursor.

7. A synchronization program as described in claim 5 or 6, **characterized in that** the computer terminal is caused to function in such a manner that
the control information means displays a transparent screen superposed on the contents, and transmits the input drawing coordinate and the input drawing type to the other computer terminal, and
the drawing coordinate and the drawing type are received from the other computer terminal, and the drawing type is drawn at the coordinate of the contents.

8. A synchronization program as described in any one of claims 1 to 7, **characterized in that** the computer terminal is caused to function in such a manner that
the synchronization program or the computer terminal having the synchronization program can transmit and receive data to and from the log management server arranged on the network, and
the synchronization program functions as
a log information transmission means for receiving the contents display request or the control information input to the contents browsing means and transmitting them as a log for the other computer terminal to the log management server, and
a log information receiving means for receiving the log of the other computer terminal from the log management server and causing the log to be executed by the content browsing means.

9. A synchronization program as described in claim 8, **characterized in that**
the log management server notifies the computer terminal constituting the other party of the log that the log is stored.

10. A synchronization program as described in claim 8 or 9, **characterized in that**
the log management server notifies by transmitting the electronic mail to the computer terminal constituting the other party of the log or when the computer terminal constituting the other party of the log logged in the session server.

11. A synchronization program as described in any one of claims 1 to 10, **characterized in that**
the synchronization program causes the computer terminal to function in such a manner that in the case where the computer terminal conducts communication by SSL with any other computer terminal than the computer terminal, the communication by SSL is conducted also between the computer terminal and the other computer terminal thereby to synchronize the contents.
